(19) Europäisches Patentamt

European Patent Office

Office européen des brevets

(11) Numéro de publication: **0 432 210 B1**

## (12) FASCICULE DE BREVET EUROPEEN

(45) Date de publication de fascicule du brevet: **18.11.93**

(51) Int. Cl.5: **A23L 1/308**, A61K 35/78, A61K 31/715, C08B 37/06

(21) Numéro de dépôt: **89910121.6**

(22) Date de dépôt: **01.09.89**

(86) Numéro de dépôt internationale : **PCT/FR89/00439**

(87) Numéro de publication internationale : **WO 90/04333 (03.05.90 90/10)**

(54) **PROCEDE DE TRAITEMENT DE PRODUITS RICHES EN PAROIS VEGETALES NOTAMMENT RICES EN PECTINES, LES DITES PECTINES, LES RESIDUS D'EXTRACTION DU PROCEDE, LEUR UTILISATION ET COMPOSITIONS LES CONTENANT.**

(30) Priorité: **05.09.88 FR 8800396**

(43) Date de publication de la demande: **19.06.91 Bulletin 91/25**

(45) Mention de la délivrance du brevet: **18.11.93 Bulletin 93/46**

(84) Etats contractants désignés: **AT BE CH DE FR GB IT LI LU NL SE**

(56) Documents cités:
**EP-A- 0 035 643**
**EP-A- 0 086 233**
**DE-A- 3 238 791**

**See also references of WO9004333**

(73) Titulaire: **INSTITUT NATIONAL DE LA RECHER-CHE AGRONOMIOUE (INRA)**
**147, rue de l'Université**
**F-75341 Paris Cédéx 07(FR)**

(72) Inventeur: **THIBAULT, Jean-François**
**2, rue de la Rotonde**
**F-44700 Orvault(FR)**
Inventeur: **DELLA VALLE, Guy**
**31, rue José-Maria-de-Hérédia**
**F-44300 Nantes(FR)**
Inventeur: **RALET, Marie-Christine**
**26, rue de Strasbourg**
**F-44000 Nantes(FR)**

(74) Mandataire: **Phélip, Bruno et al**
**c/o Cabinet Harlé & Phélip**
**21, rue de La Rochefoucauld**
**F-75009 Paris (FR)**

## EP 0 432 210 B1

**Description**

La présente invention se rapporte aux produits riches en parois végétales, et elle concerne, de façon plus particulière, un traitement d'un nouveau type qui leur est appliqué et qui conduit à des produits modifiés par voie exclusivement physique. Ces produits modifiés, qui sont nouveaux par eux-mêmes, sont utiles comme fibres alimentaires. Ils peuvent toutefois être soumis directement à une extraction aqueuse, qui conduit elle aussi aux produits nouveaux, que sont, d'une part, les fractions hydrosolubles, et, d'autre part, les résidus d'extraction. Ces derniers constituent également des fibres alimentaires. Quant aux fractions hydrosolubles, leur nature varie selon les produits de départ. On peut en isoler les substances intéressantes que sont notamment les pectines, les carraghénanes, les alginates, les agaroses, l'agar, etc... ces substances trouvant application pour leurs propriétés épaississantes et gélifiantes, en confiturerie, en confiserie et dans la préparation des plats cuisinés et des desserts lactés. Comme indiqué ci-dessus, ces substances présentent, conformément à l'invention, des caractéristiques nouvelles les rendant plus particulièrement applicables dans certains cas, comme on le décrira ci-après.

Les produits riches en parois végétales sont, d'une manière générale, constitués par les sous-produits de l'industrie alimentaire et de l'agriculture, obtenus suivant d'énormes tonnages. Ils se composent essentiellement de polysaccharides ; pectines, hémicelluloses et cellulose, qui ont des propriétés fonctionnelles et/ou nutritionnelles, utilisées par l'industrie. Ainsi, ces produits sont des sources d'aliments pour les animaux, de produits fermentescibles, de fibres alimentaires, solubles ou non, à effets nutritionnels reconnus ou probables, de polysaccharides (pectines) utilisables industriellement comme additifs alimentaires, comme indiqué ci-dessus. La présente invention s'inscrit également dans le cadre de la valorisation de ces produits.

Les traitements qui leurs sont appliqués à l'heure actuelle sont essentiellement d'ordre chimique, étant complétés par des procédés physiques classiques : séparation liquide/solide, broyage, etc.

A titre d'exemple, l'extraction des pectines à partir des sous-produits de l'industrie des jus de fruits (marcs de pomme, écorces d'arumes), est en principe réalisée à chaud (60-80 °C), par un acide minéal, à pH 1-2,5, pendant des temps pouvant aller jusqu'à plusieurs heures. Le rendement est généralement de 8 à 10 % en poids de pectines par rapport à la matière sèche initiale. La solution contenant les pectines est séparée du résidu par des techniques de centrifugation et/ou de filtration. Ensuite, on neutralise cette solution, on la concentre, on précipite en milieu alcoolique et on récupère les pectines en poudre, directement utilisables.

Un premier inconvénient de ce procédé est qu'un traitement acide est souvent cause de pollution et de corrosion des cuves, avec l'inconvénient complémentaire que les résidus sont inexploitables, mis à part pour l'alimentation animale. Or, on sait que les résidus d'extraction des pectines, voire les produits initiaux, sont potentiellement des fibres alimentaires, utiles au plan nutritionnel.

De plus, s'agissant des pectines, on sait que celles-ci doivent être hautement méthylées (autrement dit posséder un degré de méthylation DM supérieur à 50 %) et posséder une masse moléculaire suffisante, de sorte qu'elles pourront gélifier en présence de sucre et en milieu acide. Si l'on veut obtenir des pectines avec des degrés de méthylation plus bas, qui gélifieront en présence d'ions $Ca^{2+}$, en présence ou non de sucre, il faut alors effectuer une déméthylation, en milieu acide et alcoolique des pectines déjà extraites. Le résidu d'extraction des pectines constitue à son tour un sous-produit destiné à l'alimentation animale. Il apparaît cependant que l'on ne peut actuellement pas obtenir de pectines ayant des DM supérieurs à 75 %. De telles pectines pourraient s'avérer utiles dans certaines applications : on sait en effet que plus le DM est important, plus la vitesse de gélification est grande, et moins le pH doit être bas pour gélifier. Ainsi, de telles pectines seraient notamment applicables de façon nouvelle aux produits demandant une gélification ultra-rapide, et à la gélification de produits sucrés peu acides.

Par ailleurs, comme on vient de l'indiquer, les produits riches en parois végétales sont des sources de fibres alimentaires. Un regain d'intérêt pour les fibres alimentaires à incité l'industrie agro-alimentaire et l'industrie pharmaceutique à proposer des produits enrichis en fibres, destinés à être incorporés dans des produits à usage alimentaire ou médical. Les fibres alimentaires sont constituées principalement de cellulose, d'hémicellulose, de substances pectiques et de lignine. On estime que la carence en fibres alimentaires serait à l'origine de maladies coliques (constipation, diverticulose) ou métaboliques (diabète, hypercholestérolémie, lithiase biliaire, obésité). Le pouvoir d'absorption d'eau des fibres augmente l'hydratation des selles, ce qui facilite le transit intestinal. Les régimes riches en fibres augmentent les pertes caloriques fécales et permettent d'obtenir un encombrement intestinal plus important pour un ingestat calorique moindre.

A l'heure actuelle, l'obtention de fibres alimentaires est réalisée par des technologies, telles que des fractionnements physiques pour le son de blé, ou par des broyages/lavages en milieu hydroalcoolique pour

2

EP 0 432 210 B1

des fibres obtenues à partir de fruits ou légumes. Les fibres obtenues ont des propriétés qui sont fixées par la nature des produits de départ. Ainsi, elles présentent une faible hydrosolubilité. Il serait donc intéressant d'obtenir, à partir d'un même produit de départ, qui fibres qui pourraient présenter une hydrosolubilité supérieure, et dont on pourrait également régler la solubilité et, en conséquence, la dégradabilité, de façon à pouvoir disposer de produits ayant un rapport fibres solubles/fibres insolubles adapté à chaque fois aux besoins nutritionnels, les fibres insolubles ayant plutôt un rôle mécanique direct sur le transit digestif, par rapport aux fibres solubles, qui auraient un rôle plutôt métabolique. De la même façon, il serait intéressant de pouvoir régler les propriétés d'absorption/rétention d'eau de ces fibres, dans la mesure où elles sont également utilisables commme éléments de charge ne visant pas d'apports de calories. Un procédé de traitement de produits riches en parois végétales est connu du document EP-A-86 233. Ce procédé connu se disjoint du procédé revendiqué notamment par le pretraitement des produits végétaux, c'est à dire ; le traitement de cisailleinent ultérieur.

La présente invention propose de nouveaux produits répondant aux demandes évoquées ci-dessus, ces nouveaux produits étant obtenus par un procédé nouveau, ne présentant plus aucun des inconvénients de la technique antérieure. Ainsi, l'invention propose en premier lieu, des produits riches en parois végétales, modifiés pour présenter une teneur en fraction hydrosoluble accrue ; ces produits modifiés constituant des combinaisons intéressantes fibres solubles/fibres insolubles, ce qui ne peut pas être obtenu par le traitement acide classique qui sépare les deux fractions.

L'invention propose même une solution pour faire varier de façon contrôlée le rapport des fibres solubles aux fibres insolubles de ces produits modifiés. Le procédé d'obtention de ces produits modifiés présente l'avantage de conduire directement à de tels produits, sans qu'il soit nécessaire de les sécher, ce procédé ne posant par ailleurs aucun problème de corrosion chimique ou de pollution, car le traitement par l'acide est supprimé. En outre, la modification des produits de départ étant exclusivement physique, et non chimique ou biotechnologique, les produits obtenus peuvent être qualifiés de naturels, ce qui représente également un intérêt au plan diététique et législatif.

De plus, une extraction aqueuse effectuée sur ces produits modifiés conduit à un extrait riche en polysaccharides solubles (pectines, carraghénanes, alginates, etc), que l'on peut obtenir directement par précipitation par les agents classiques tels que des alcools comme l'éthanol ou l'isopropanol, ou par des sels multivalents comme les sels d'aluminium, autrement dit sans avoir recours à la phase de neutralisation du procédé classique. De plus, selon l'invention, on obtient des pectines ayant un degré de méthylation très élevé, jamais obtenu jusqu'ici.

L'extraction aqueuse conduit également à des résidus utilisables comme fibres alimentaires, avec un pouvoir d'absorption d'eau généralement accru.

La présente invention a donc d'abord pour objet un produit riche en parois végétales, modifié pour renfermer une fraction de polysaccharides hydrosolubles supérieure à celle existant naturellement, sans modification de la composition chimique globale dudit produit. En particulier, l'invention porte sur un produit modifié, tel qu'il vient d'être défini, dont la teneur en fraction de polysaccharides hydrosolubles est au moins égale au double de cette teneur dans le produit naturel.

Ce produit modifié peut être issu de végétaux supérieurs naturellement riches en pectines, comme les marcs de pomme, les écorces d'agrumes et les pulpes de betterave, les algues, de son de blé, de pulpe de pomme de terre, de coques, commes les coques de tournesol, ou de résidus d'huilerie. Il peut se présenter sous la forme d'agrégats de dimensions réduites, tels que pastilles, granules, etc, ou bien sous une forme pulvérulente. Sa teneur en eau est généralement inférieure à 12 % en poids sur une base humide.

La présente invention a également pour objet un procédé de fabrication du produit tel que défini ci-dessus, caractérisé par le fait qu'on utilise un produit de départ riche en parois végétales à l'état divisé, qu'on ajoute de l'eau si nécessaire audit produit à l'état divisé, pour obtenir un mélange apte à subir le traitement de cisaillement ultérieur, et qu'on soumet le produit éventuellement additionné d'eau à un effort de cisaillement avant extrusion, pour obtenir les produits recherchés sous forme d'agrégats de dimensions réduites, lesquels sont, le cas échéant, soumis à un broyage pour obtenir le produit recherché sous une forme pulvérulente.

On obtient ainsi des produits modifiés dont la partie soluble peut être accrue d'un facteur aussi important que de deux à trois, sans que la composition chimique globale ait été changée. Ces valeurs peuvent, dans certains cas, dépasser celles obtenues avec les traitements acides correspondants de la technique antérieure.

De plus, les produits modifiés obtenus ont une couleur plus claire que les produits initiaux, et ils ne nécessitent aucun séchage vu leur faible teneur en eau après extrusion. Ils peuvent subir une mise en forme selon la géométrie de la filière de l'appareil d'extrusion. On peut également les broyer après extrusion de façon à obtenir des poudres de granulométrie déterminée.

La capacité d'absorption d'eau de ces produits modifiés n'est généralement pas changée après le procédé d'extrusion malgré le fort pourcentage de produit soluble. Elle est augentée dans certains cas, comme celui de la pomme.

Par ailleurs, on a, dans la plupart des cas, constaté que la quantité de fraction hydrosoluble que l'on peut obtenir augmente linéairement avec l'énergie délivrée au produit pour assurer le cisaillement, indépendamment de la température. Ceci n'était pas évident et permet de régler le rapport fibres solubles/fibres insolubles des produits modifiés.

On utilise généralement un produit de départ ayant une teneur en matières sèches d'au moins environ 70 % en poids sur une base humide. Par ailleurs, on ajoutera, la plupart du temps, de l'eau au produit de départ, notamment à raison de 10 à 30 % en poids par rapport au produit tel quel, la quantité d'eau ajoutée étant fonction de la teneur en eau du produit de départ et de l'intensité du traitement à effectuer.

Ce produit de départ est broyé, si nécessaire, pour avoir une granulométrie par exemple, de l'ordre du millimètre. On applique un gradient de cisaillement généralement compris entre 100 et 800 s⁻¹, ce qui peut être obtenu grâce à un extrudeur bi-vis, pour une vitesse de rotation comprise entre environ 100 et 300 tours par minute.

On peut éventuellement apporter de la chaleur au produit dans la zone de cisaillement, en complément de celle engendrée par ledit cisaillement.

Ce procédé de cisaillement-extrusion peut être conduit dans un extrudeur à double vis classique, comportant une zone d'alimentation recevant, d'une part, le produit de départ à l'état divisé, et, d'autre part, l'eau, le mélange et le transport s'effectuant dans une zone de transport faisant suite à ladite zone d'alimentation, la zone de transport étant, quant à elle, suivie d'une zone de cisaillement, dans laquelle les vis sont avantageusement à pas inversé (contre-filet) et sont munies de fuites permettant le passage de la matière. La sortie du produit modifié s'effectue alors par deux filières de configuration classique.

La présente invention porte également sur un procédé de traitement de produits riches en parois végétales, caractérisé par le fait que l'on conduit le traitement de cisaillement -extrusion précité et que l'on soumet le produit extrudé directement à une extraction aqueuse, permettant de récupérer, d'une part, un résidu insoluble, et, d'autre part, les polysaccharides solubilisés. Dans le cas de produits de départ riches en pectines, on isole les pectines par précipitation par les techniques classiques, notamment en milieu alcoolique.

Ces pectines présentent un degré de méthylation supérieur à 75 %, et, notamment, de 80 à 90 %. Elles peuvent également être caractérisées par une teneur accrue, par rapport aux pectines obtenues par voie classique, en arabinose, de l'ordre de 50 à 100 %.

Quant aux résidus d'extraction aqueuse, ils peuvent être caractérisés par un pouvoir d'absorption d'eau supérieur à environ 20 g d'eau par gramme de produit sec.

La présente invention porte également sur l'utilisation, comme fibres alimentaires, en industrie alimentaire, pharmaceutique et diététique, des produits modifiés tels qu'obtenus par le procédé de cisaillement-extrusion, et des résidus d'extraction aqueuse, tels que définis ci-dessus. L'invention porte également sur des compositions alimentaires, pharmaceutiques ou diététiques renfermant de telles fibres.

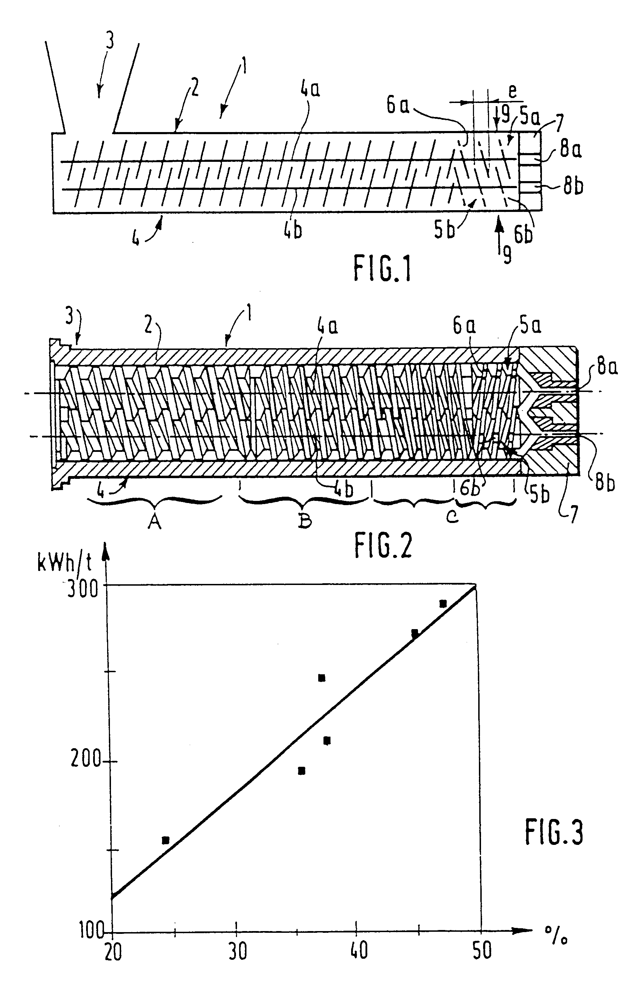

Pour mieux illustrer le procédé de la présente invention, on décrira plus en détail ci-après un appareillage pour la mise en oeuvre du procédé de cisaillement-extrusion de l'invention en référence au dessin annexé, sur lequel la figure 1 est une vue schématique, en coupe axiale longitudinale, d'un extrudeur utilisable selon l'invention, et la figure 2 est une vue schématique, partiellement en coupe axiale longitudinale, partiellement en élévation, d'un autre extrudeur à double vis pouvant être utilisé dans la mise en oeuvre de l'invention.

La figure 1 du dessin annexé, représente, de façon schématique, un extrudeur à double vis utilisable pour la mise en oeuvre du procédé de cisaillement-extrusion de l'invention. Cet extrudeur 1 comporte un fourreau externe cylindrique 2, disposé horizontalement. Dans une région d'extrémité du fourreau 2, sont disposées une trémie 3 d'alimentation en produit solide, et une entrée d'eau symbolisée en 4. A l'intérieur du fourreau 2, sont disposées deux vis corotatives copénétrantes 4a, 4b, qui sont destinées à diriger le mélange produit-eau, à partir de la zone d'alimentation, et par une zone centrale de transport, à une zone de cisaillement, dans laquelle le pas des vis s'inverse en 5a, 5b. Ces éléments de vis à pas inversé 5a, 5b sont munis de fuites respectivement 6a, 6b, pour permettre le passage du produit. En aval de la zone de cisaillement, est constituée une zone 7, comportant deux filières cylindriques respectivement 8a, 8b. On a par ailleurs symbolisé en 9 un apport éventuel de chaleur.

L'extrudeur de la figure 2 diffère de celui de la figure 1 par le fait qu'il possède des zones successives d'alimentation (A) et de transport (B et C), à pas de vis de plus en plus faibles.

Pour mieux illustrer les produits de la présente invention, on en décrira plus en détail ci-après plusieurs formes de réalisation. Les Exemples 1a à 1d, 2a à 2d et 3a à 3f sont des exemples de l'invention. La figure 3 du dessin annexé est associée aux Exemples 3a à 3f. Ont été utilisées, pour la mesure de l'absorption d'eau, la méthode décrite dans l'article intitulé "Structure and Properties of Sugar Beet Fibres", C. Bertin, X. Rouau et J.F. Thibault, J. Sci. Food Agric. (1988) Tome 44, pages 15-29 ; et pour la caractérisation des pectines (Tableau 4), les méthodes décrites dans l'article intitulé "Characterisation and Oxydative Crosslinking of Sugar Beet Pectines extracted from Cossettes and Pulps under different conditions", J.F. Thibault, Carbohydrate Polymers (1988) n°8, Pages 209-223.

EXEMPLE DE REFERENCE 1 et EXEMPLES 1a à 1d

TRAITEMENT DE MARCS DE POMMES

On utilise des marcs de pomme dont la teneur en matières sèches est de 89,3 % en poids. On réalise leur broyage à l'aide d'un broyeur à marteaux Rousselle (vitesse linéaire : 100 m/s), muni d'une grille de 2 mm. Le produit obtenu est le produit conforme à l'Exemple de Référence 1.

On conduit ensuite le traitement de cisaillementextrusion de l'invention, en ajoutant au produit de l'Exemple de Référence 1, à chaque fois une quantité d'eau telle qu'indiquée dans le Tableau 1, exprimée en pourcentage par rapport au poids tel quel du produit initial, puis en conduisant le traitement proprement dit, en faisant varier certains paramètres également comme indiqué dans le Tableau 1, dans un appareil cuiseur-extrudeur Clextral BC45, du type de celui décrit en référence avec la figure 2 avec les caractéristiques principales suivantes :

La longueur totale du fourreau 2 est d'environ 1 mètre, l'entraxe entre les deux vis 4a, 4b de 45 mm, et les filières cylindriques 8a, 8b présentent un rayon de 2 mm et une longueur de 30 mm. L'écartement e entre les vis est de 1 mm, ou moins.

La température indiquée dans le Tableau 1 est celle du fourreau 2 avant la zone des filières 7, et le nombre de tours par minute se rapporte à la vitesse de rotation des vis (4a, 4b), exprimant le taux de remplissage de celles-ci pour un débit constant. Les intensités des traitements conformes aux Exemples 1a à 1d ont été évaluées par la mesure de l'énergie mécanique fournie par le moteur principal (E, exprimée en kWh/t).

On a ensuite mesuré, pour le produit de l'Exemple de Référence 1 et ceux des Exemples 1a à 1d,
- le pourcentage de matières insolubles dans l'eau ;
- le pourcentage des matières solubles dans l'eau ; et
- l'absorption d'eau.

On a conduit une extraction aqueuse de façon classique, en utilisant 1 gramme de produit extrudé dans 3 fois 100 ml d'eau. La séparation est réalisée par centrifugation.

Les chromatographie par perméation de gel (GPC) sur gel de Sepharose® CL2B effectuées sur l'extrait aqueux ont montré deux populations : l'une de masse moléculaire importante, composée essentiellement d'acides galacturoniques, et l'autre, de masse moléculaire plus faible, constituée principalement d'oses neutres. Les pectines ont été ensuite précipitées de l'extrait aqueux en milieu alcoolique (80 % en volume d'éthanol dans le mélange final), ce qui permet d'éliminer au moins en partie la population de plus faible masse moléculaire. Dans le Tableau 1, sont rapportés également :
- la teneur en acides galacturoniques (AAG) et la teneur en oses neutres (ON) du produit initial ; et
- le pourcentage du produit initial précipitable par l'éthanol à 80 % (Exemple 1b).

L'ensemble des résultats obtenus est rapporté dans le Tableau 1.

EXEMPLE COMPARATIF 1 :

Après avoir réalisé le même broyage qu'à l'Exemple 1, sur le même produit de départ, on réalise un traitement classique d'extraction des pectines : 5 g de produit extrait par trois fois 150 ml d'HCl 0,05N, à 85°C, pendant 3 x 30 minutes. On a conduit sur ce produit les mêmes mesures que pour les Exemples de Référence 1 et les Exemples 1a à 1d, les résultats étant également rapportés dans le Tableau 1.

Tableau 1

| Exemple | Traitement après broyage | | | Insolubles dans l'eau (%) | Solubles dans l'eau | | | | Absorption d'eau (ml/g) | |
|---|---|---|---|---|---|---|---|---|---|---|
| | % eau ajoutée | Tours/mn | E (kWh/t) | | (%) | ZAAG | ZON | %précipitables | Avant extraction aqueuse | Après extraction aqueuse * |
| Réf.1 | Néant | | | 78,4 | 21,6 | 1,5 | 7,3 | | 8,1 | 9,5 |
| | Cisaillement-extrusion à 100 °C | | | | | | | | | |
| 1a | 20 | 150 | 156,9 | 63,5 | 36,5 | 5,4 | 10,9 | | 18,1 | 22,3 |
| 1b | 20 | 250 | 230,4 | 60 | 40 | 7,4 | 12,1 | 12,1 | 16,5 | 22,2 |
| 1c | 10 | 250 | 265,8 | 48,7 | 51,3 | 9,5 | 16,6 | | 13,1 | 22,3 |
| 1d | 30 | 250 | 175,6 | 66,9 | 33,1 | 5 | 10,1 | | 17,6 | 21,4 |
| Comp.1 | Extraction acide | | | 59,6 | 40,4 | 9,3 | 16,2 | 13,7 | 13,7 | |

* Ce paramètre est discuté à l'exemple 4

Si l'on examine le Tableau 1, on constate que la solubilité dans l'eau des produits des Exemples 1a à 1d est supérieure à celle du produit de référence 1. Cette solubilité augmente avec une augmentation de la vitesse de rotation des vis et avec une diminution de la quantité d'eau ajoutée, en d'autres termes, avec l'augmentation de l'énergie mécanique fournie par le moteur principal de l'extrudeuse.

6

Le traitement acide de l'Exemple Comparatif 1 permet de solubiliser envirion 40 % du poids des marcs de pomme. Le traitement de cisaillement-extrusion permet d'obtenir une solubilisation égale, voire de la dépasser, (Exemple 1c).

La capacité d'absorption d'eau de ces produits augmente de façon importante (de l'ordre du double) après le traitement de cisaillement-extrusion de l'invention, (sans extraction aqueuse).

La composition en AAG et en ON totaux montre que les matières solubles sont enrichies en polysaccharides par rapport au produit de référence. Ces résultats sont comparables à ceux obtenus dans le cas de l'Exemple Comparatif 1 (extraction acide des pectines), ce qui montre l'efficacité du traitement de cisaillement-extrusion de l'invention pour augmenter la fraction polysaccharidique (ou de fibres) hydrosoluble.

En ce qui concerne la fraction précipitable, elle est obtenue avec un rendement de 12 %, ce qui est comparable avec le pourcentage obtenu dans le cas d'extraction acide, montrant également l'efficacité du procédé de l'invention.

Les pectines, dont on a indiqué qu'elles étaient obtenues avec des rendements similaires à ceux de l'extraction acide, ont été étudiées plus précisément, leurs caractéristiques étant indiquées dans le Tableau 4.

On constate, en examinant le Tableau 4, que les pectines de pomme, obtenues après cisaillement-extrusion, ont une masse moléculaire plus importante que celles obtenues par voie acide. Les pectines obtenues selon l'invention ont des teneurs plus importantes en acides galacturoniques, et des degrés de méthylation et d'acétylation plus forts que ceux obtenus dans le cas de l'extraction acide.

Il y a lieu de souligner que le degré de méthylation obtenu est très élevé, puisqu'il est de 90 %. Cette valeur n'a jamais été obtenue par extraction acide, car les fonctions esters sont hydrolysables dans un tel milieu, d'où des degrés de méthylation limités à 70 %. Ceci confère aux pectines de pomme ainsi obtenues des caractéristiques de gélification différentes de celles obtenues par voie acide, car une augmentation du degré de méthylation diminue le temps de gélification et augmente le pH de gélification. Ainsi, avec les pectines de l'invention, on n'a pu obtenir de vrais gels (gels homogènes) dans les conditions classiques de gélification des pectines hautement méthylées (pH = 2,4 ; 90°C ; 65 % de saccharose), mais plutôt des prégels ou des gels hétérogènes, ces phénomènes étant dus à des gélifications trop rapides à ce pH. Quand le pH est porté à 3, de vrais gels sont obtenus pour des concentrations de 1,8 % en pectine de l'invention.

EXEMPLE DE REFERENCE 2 et EXEMPLES 2a à 2d,

EXEMPLE COMPARATIF 2 :

TRAITEMENT D'ECORCES DE CITRUS

On a procédé de la même façon que dans le cas des marcs de pomme, et on a présenté les résultats de la même façon. La teneur en matières sèches des produits initiaux était de 89,8 % en poids.

Les mêmes remarques que précédemment peuvent être fournies, le traitement acide solubilisant environ 50 % du poids des écorces de citrus, valeur qui est dépassée dans le cas du traitement de cisaillement-extrusion de l'invention. On peut donc obtenir par le procédé de l'invention des écorces de citrus traitées, dont la partie soluble a été acrue d'un facteur de deux à trois sans que la composition chimique globale ait été changée.

En ce qui concerne la capacité d'absorption d'eau, les résultats montrent que les valeurs ne sont pas modifiées, et qu'elles sont même légèrement augmentées après le traitement de cisaillement-extrusion de l'invention.

Concernant le pourcentage de précipitables par l'éthanol à 80 %, on constate que l'on peut obtenir des pectines avec un rendement de l'ordre de 25 %, d'égale importance à celui obtenu par extraction acide.

Si l'on se rapporte maintenant au Tableau 4, on constate que la masse moléculaire est inférieure de moitié à celle du produit extrait par voie acide et que les pectines obtenues ont des teneurs plus importantes en acides galacturoniques, et un degré de méthylation et un degré d'acétylation plus forts que ceux obtenus dans le cas de l'extraction acide. Ce degré de méthylation est également remarquable puisqu'il est de l'ordre de 85 %. Des gels ont été obtenus dans les mêmes conditions que précédemment.

EP 0 432 210 B1

Tableau 2

| Exemple | Traitement après broyage | | | Insolubles dans l'eau (%) | Solubles dans l'eau | | | | Absorbtion d'eau (ml/g) | |
|---|---|---|---|---|---|---|---|---|---|---|
| | | | | | (%) | %AAG | %ON | %précipitables | Avant extraction aqueuse | Après extraction aqueuse * |
| Réf. 2 | Néant | | | 79,7 | 20,3 | 2,5 | 4,7 | | 14,5 | 27,2 |
| | Cisaillement-extrusion à 100 °C | | | | | | | | | |
| | % eau ajoutée | Tours/mn | E (kWh/t) | | | | | | | |
| 2a | 20 | 150 | 167 | 54,1 | 45,9 | 14,6 | 12,1 | | 15,4 | 28,8 |
| 2b | 20 | 250 | 227,2 | 54,1 | 45,9 | 17,9 | 11,8 | 24,7 | 18,3 | 28,7 |
| 2c | 10 | 250 | 300,5 | 40 | 60 | 22,4 | 12,6 | | 13,6 | 27,3 |
| 2d | 30 | 250 | 188,3 | 64,8 | 35,9 | 12,9 | 8,7 | | 15,8 | 22,3 |
| Comp.2 | Extraction acide | | | 49,6 | 50,4 | 22,9 | 13,2 | 24,8 | 15,9 | |

* Ce paramètre est discuté à l'exemple 4

EXEMPLE DE REFERENCE 3, EXEMPLES 3a à 3f et

EXEMPLE COMPARATIF 3 :

TRAITEMENT DES PULPES DE BETTERAVES

On a procédé de la même façon que précédemment et on a présenté les résultats de la même façon. La teneur en matières sèches des produits initiaux était de 90,6 % en poids. Les mêmes remarques que précédemment peuvent être formulées. On a par ailleurs présenté, en figure 4, la courbe obtenue en portant en abscisses, le pourcentage de fibres solubles, et en ordonnées, l'énergie fournie par le moteur principal de l'extrudeuse, qui montre une bonne corrélation entre ces deux grandeurs (coefficient de corrélation : 0,94).

Tableau 3

| Exemple | Traitement après broyage | | | | Insolubles dans l'eau (%) | Solubles dans l'eau | | | | Absorbtion d'eau (ml/g) | |
|---|---|---|---|---|---|---|---|---|---|---|---|
| | | | | | | (%) | %AAG | %ON | %précipitables | Avant extraction aqueuse | Après extraction aqueuse * |
| Réf.3 | Néant | | | | 83,4 | 16,6 | 0,7 | 6,1 | | 19,3 | 24,7 |
| | Cisaillement-extrusion | | | | | | | | | | |
| | % eau ajoutée | Temp (°C) | Tours/mn | E (kWh/t) | | | | | | | |
| 3a | 20 | 100 | 150 | 211,2 | 62,1 | 37,9 | 11,4 | 10,4 | | 19,8 | 27,3 |
| 3b | 20 | 100 | 250 | 270,7 | 54,8 | 45,2 | 14,5 | 13,3 | 22,2 | 14,4 | 28,8 |
| 3c | 30 | 100 | 250 | 245,9 | 62,5 | 37,5 | 9,8 | 7,8 | | 18,9 | 26,2 |
| 3d | 30 | 100 | 150 | 154,6 | 75,6 | 24,4 | 4,8 | 6,4 | | 17,1 | 22,6 |
| 3e | 30 | 180 | 150 | 193,8 | 64,3 | 35,7 | 8,9 | 9,6 | | 18,7 | 26,1 |
| 3f | 20 | 180 | 250 | 287,3 | 52,5 | 47,5 | 13 | 15,1 | | 13,4 | 21,9 |
| Comp 3 | Extraction acide | | | | 50,5 | 49,5 | 10,9 | 14,7 | 18,6 | 28,8 | |

* Ce paramètre est discuté à l'exemple 4

Tableau 4

| Traitement de l'exemple | 1b + extraction aqueuse | Comp.1 | 2b + extraction aqueuse | Comp.2 | 3b + extraction aqueuse | Comp.3 |
|---|---|---|---|---|---|---|
| Viscosité intrinsèque (ml/g) | 240 | 166 | 220 | 546 | 110 | 310 |
| Masse moléculaire | 44 900 | 34 000 | 42 100 | 82 900 | 25 100 | 54 400 |
| Degré de méthylation | 90 | 74,1 | 84,9 | 72,1 | 78,5 | 75,4 |
| Degré d'acétylation | 7,1 | 6 | 4,7 | 2,2 | 39,1 | 30,7 |
| Teneur en acides galacturoniques | 54,4 | 34,2 | 69,6 | 61,5 | 45,3 | 41,2 |
| Teneur en oses neutres dont : | 21,5 | 12,4 | 11,7 | 8,9 | 17,3 | 12,0 |
| - rhamnose | 0,8 | 0,7 | 0,7 | 0,7 | 1,4 | 1,2 |
| - arabinose | 6,5 | 3,8 | 5,6 | 5,0 | 10,5 | 4,9 |
| - xylose | 0,7 | 0,8 | 0,7 | 0,1 | 0,2 | 0,1 |
| - mannose | 0,3 | 0,0 | 0,7 | 0,0 | 0,2 | 0,1 |
| - galactose | 2,6 | 4,1 | 2,8 | 2,4 | 2,8 | 2,8 |
| - glucose | 10,7 | 3,4 | 1,3 | 0,6 | 2,3 | 2,9 |
| Acide férulique | 1,0 | 0,9 | - | - | - | - |

Le Tableau 5 indique la composition glucidique (% en poids sec) des produits de départ, des résidus de l'exraction aqueuse conduite sur les produits extrudés, et des produits constitués par les résidus de l'extraction acide classique.

11

Tableau 5

| Traitement de l'Exemple | Réf1 | Réf1 + | 1a extraction | 1b | 1c aqueuse | 1d | Comp1 |
|---|---|---|---|---|---|---|---|
| Rhamnose | 1 | 1,4 | 1,4 | 1,2 | 1,7 | 1,8 | 2,1 |
| Arabinose | 6 | 5,2 | 6,1 | 4,1 | 2,5 | 6 | 2 |
| Xylose | 3,5 | 3,1 | 5,1 | 4,7 | 7,6 | 5,1 | 8,3 |
| Mannose | 2 | 1,2 | 2,1 | 1,9 | 1,8 | 1,8 | 2,5 |
| Galactose | 4,3 | 4,2 | 6,1 | 5,1 | 3,8 | 5,6 | 5,4 |
| Glucose | 17 | 14,2 | 20,7 | 19,2 | 18,9 | 17 | 17 |
| Acides galacturoniques | 13,8 | 13,7 | 13,1 | 10,9 | 5,5 | 12,6 | 11,8 |
| Total | 47,6 | 43 | 54,6 | 47,1 | 41,8 | 49,9 | 49,1 |

| Traitement de l'Exemple | Réf2 | Réf2 + | 2a extraction | 2b | 2c aqueuse | 2d | Comp2 |
|---|---|---|---|---|---|---|---|
| Rhamnose | 1,5 | 1,7 | 2,1 | 1,9 | 1 | 1,4 | 2,8 |
| Arabinose | 7 | 8,6 | 7 | 7,3 | 2,4 | 8,1 | 2,3 |
| Xylose | 2,5 | 3,2 | 4,8 | 4,3 | 4,3 | 3,1 | 5,5 |
| Mannose | 2,9 | 2,8 | 3,8 | 3,4 | 3,2 | 2,7 | 4,3 |
| Galactose | 5,4 | 6,1 | 7,2 | 6,7 | 4,3 | 6,5 | 6,6 |
| Glucose | 12,4 | 10,3 | 15,7 | 13,4 | 15,7 | 11,5 | 17,9 |
| Acides galacturoniques | 29,2 | 30,3 | 21,2 | 19,9 | 13 | 25 | 22,5 |
| Total | 60,9 | 63 | 61,8 | 56,9 | 43,9 | 58,3 | 61,9 |

| Traitement de l'Exemple | Réf3 | Réf3 | 3<u>a</u> | 3<u>b</u> | 3<u>c</u> | 3<u>d</u> | 3<u>e</u> | 3<u>f</u> | Comp3 |
|---|---|---|---|---|---|---|---|---|---|
| | | + extraction aqueuse | | | | | | | |
| Rhamnose | 1,7 | 0,8 | 0,9 | 0,9 | 1,3 | 1,6 | 0,8 | 0,8 | 2,4 |
| Arabinose | 10,7 | 9,8 | 8,9 | 8,4 | 7,4 | 8,9 | 8,3 | 7 | 6,3 |
| Xylose | 0,6 | 0,5 | 0,6 | 0,7 | 0,5 | 0,5 | 0,5 | 0,9 | 3 |
| Mannose | 0,9 | 0,6 | 0,7 | 0,8 | 0,7 | 0,6 | 0,5 | 0,7 | 2 |
| Galactose | 4,1 | 3,1 | 3,3 | 3,1 | 3,3 | 3,2 | 3 | 2,8 | 5,1 |
| Glucose | 26,4 | 14,4 | 21,6 | 23,2 | 22,2 | 18,1 | 17,3 | 25,5 | 15 |
| Acides galacturoniques | 17,9 | 15,2 | 9 | 7,9 | 11 | 13,3 | 12,2 | 7,2 | 15,1 |
| Total | 62,3 | 44,4 | 45 | 45 | 46,4 | 46,2 | 42,6 | 44,9 | 48,9 |

Les résultats montrent qu'à part un appauvrissement en acides galacturoniques et un enrichissement éventuel en glucose (d'origine cellulosique), ces résidus ont des compositions globales proches des produits initiaux. Leur teneur globale en polysaccharides est en général aussi élevée que celle des produits initiaux. Des fibres alimentaires peuvent être obtenues à partir de ces produits après séchage et broyage. Par ailleurs, le procédé améliore de façon significative la couleur des produits obtenus.

Les propriétés d'absorption ont été indiquées à chaque fois, respectivement, dans les Tableaux 1 à 3, pour la pomme, le citrus et la betterave. Les valeurs obtenues pour ces fibres sont généralement plus importantes que celles des produits initiaux, avant ou après extrusion, ou que celles des résidus d'extraction acide.

## Revendications

1. Procédé de traitement de produits riches en parois végétales, caractérisé par le fait qu'on utilise un produit de départ riche en parois végétales à l'état divisé, qu'on ajoute de l'eau, si nécessaire, audit produit à l'état divisé, pour obtenir un mélange apte à subir le traitement de cisaillement ultérieur, et qu'on soumet le produit éventuellement additionné d'eau à un effort de cisaillement avant extrusion, pour obtenir un produit riche en parois végétales, modifié pour renfermer une fraction de polysaccharides hydrosolubles supérieure à celle existant naturellement sans modification de la composition chimique globale dudit produit, ledit produit modifié se présentant sous la forme d'agrégats de dimensions réduites, tels que pastilles, granules ou similaires, lesquels sont, le cas échéant, soumis à un broyage pour obtenir ledit produit modifié sous une forme pulvérulente, et que l'on soumet ledit produit modifié, éventuellement sous forme pulvérulente, à une extraction aqueuse, permettant de récupérer, d'une part, une fraction hydrosoluble, et d'autre part, le résidu d'extraction.

2. Procédé selon la revendication 1, caractérisé par le fait qu'on utilise un produit de départ ayant une teneur en matières sèches d'au-moins 70 % en poids sur une base humide.

3. Procédé selon l'une des revendications 1 et 2, caractérisé par le fait qu'on utilise un produit de départ présentant une granulométrie de l'ordre du millimètre.

4. Procédé selon l'une des revendications 1 à 3, caractérisé par le fait qu'on ajoute de l'eau au produit de départ, à raison de 10 à 30 % en poids par rapport au produit tel quel.

5. Procédé selon l'une des revendications 1 à 4, caractérisé par le fait qu'on applique un gradient de cisaillement compris entre 100 et 800 $s^{-1}$.

6. Procédé selon l'une des revendications 1 à 5, caractérisé par le fait qu'on règle la fraction hydrosoluble du produit que l'on veut obtenir en faisant varier l'énergie délivrée au produit en cours de cisaillement.

7. Procédé selon l'une des revendications 1 à 6, caractérisé par le fait que la teneur en fraction de polysaccharides hydrosolubles du produit modifié est au moins égale à 1,5 fois et en particulier au double de cette teneur dans le produit naturel.

8. Procédé selon l'une des revendications 1 à 7, caractérisé par le fait que le produit modifié présente une teneur en eau au plus égale à 12 % en poids sur une base humide.

9. Procédé selon l'une des revendications 1 à 8, dans lequel les produits de départ sont issus de végétaux supérieurs naturellement riches en pectines, comme les marcs de pomme, les écorces d'agrumes et les pulpes de betterave, caractérisé par le fait qu'on extrait les pectines de la fraction hydrosoluble obtenue, directement par précipitation par un alcool ou par des sels multivalents.

10. Procédé selon l'une des revendications 1 à 9, caractérisé par le fait que l'on sèche et broie le résidu d'extraction.

11. Pectines présentant un degré de méthylation au moins égal à 75 %.

12. Pectines selon la revendication 11, caractérisées par le fait qu'elles présentent un degré de méthylation de 80-90 %.

13. Pectines selon l'une des revendications 11 et 12, caractérisées par le fait qu'elles présentent, par rapport aux pectines obtenues par un traitement d'extraction à chaud par un acide minéral, à pH 1-2,5, des sous-produits de l'industrie des jus de fruits, une teneur accrure en arabinose de l'ordre de 50-100 %.

14. Résidu d'extraction susceptible d'être obtenu par le procédé tel que défini à l'une des revendications 1 à 10 et caractérisé par un pouvoir d'absorption d'eau supérieur à environ 20 grammes d'eau par gramme de produit sec.

15. Utilisation des pectines telles que définies à l'une des revendications 11 à 13, comme agents épaississants et gélifiants en confiturerie, en confiserie et dans la préparation de plats cuisinés et de desserts lactés, ces pectines s'appliquant notamment aux produits demandant une gélification ultra-rapide et à la gélification de produits sucrés peu acides.

16. Utilisation du résidu d'extraction obtenu par le procédé tel que défini à la revendication 10, comme fibres alimentaires, en industrie alimentaire, pharmaceutique et diététique.

17. Compositions alimentaires et diététiques, produits de confiturerie, de confiserie, plats cuisinés et desserts lactés, renfermant des pectines telles que définies à l'une des revendications 11 à 13.

18. Compositions alimentaires, pharmaceutiques et diététiques, caractérisées par le fait qu'elles renferment des fibres alimentaires qui sont constituées par le résidu d'extraction obtenu par le procédé tel que défini à la revendication 10.

**Claims**

1. Process for treating plant wall-rich products characterized in that a plant wall-rich starting material is employed in the divided state, water is added, if necessary, to the said product in the divided state, to obtain a mixture capable of undergoing the subsequent shearing treatment, and the product, to which water is optionally added, is subjected to a shearing force before extrusion,to obtain a plant wall-rich product modified to contain a water-soluble polysaccharides fraction higher than that existing naturally, without alteration of the overall chemical coposition of the said product, the said modified product being in the form of small-size aggregates such as tablets, granules and the like which are, if appropriate, subjected to a grinding operation to obtain the said modified product in a pulverent form and that the said modified product, possibly under a pulverent form, is subjected to an aqueous extraction which allows to recover on the one hand a water-soluble fraction, and on the other hand the extraction residue.

2. Process as claimed in claim 1, characterized in that a starting material which has a dry matter content of at least 70% by weight on a wet basis is employed.

3. Process as claimed in either of claims 1 and 2, characterized in that a starting material which has a particle size of the order of a millimeter is employed.

4. Process as claimed in either of claims 1 to 3, characterized in that water is added to the stare material in a proportion of 10 to 30% by weight relative to the material as such.

5. Process as claimed in either of claims 1 to 4, characterized in that a shear gradient of between 100 and 800 s$^{-1}$ is applied.

6. Process as claimed in claims 1 to 5, characterized in that the water-soluble fraction of the product which it is desired to obtain is controlled by varying the energy delivered to the product during shearing.

7. Process as claimed in claims 1 to 6, characterized in that the water-soluble polysaccharide fraction content of the modified product is at least equal to 1.5 times and in particular is twice that content in the natural product.

8. Process as claimed in claims 1 to 7, characterized in that the modified product has a water content not exceeding 12% by weight on a wet basis.

9. Process as claimed in claims 1 to 8, wnerein the starting materials originate from naturally pectin-rich higher plants such as apple marcs, citrus peelings and beet pulps, characterized in that the pectins of the water-soluble fraction thus obtained are extracted directly by alcoholic precipitation or by precipitation with multivalent salts.

10. Process as claimed in claims 1 to 9, characterized in that the extraction residue is dried and ground.

11. Pectins having a methylation degree at least equal to 75%.

12. Pectins as claimed in claim 11, characterized in that they have a methylation degree of 80-90%.

13. Pectins as claimed in claims 11 and 12, characterized in that their arabinose content is increased of the order of 50 to 100%, in coparison with the pectins obtained by a hot extraction treatment by an organic acid, at pH 1-2,5, of the by-products of the fruit juice industry.

14. Extraction residue susceptible to be obtained by the process as defined in one of the claims 1 to 10, characterized in that it has a water-absorption capacity of more than approximately 20 g of water per gram of dry product.

15. Use of the pectins as defined in one of the claims 11 to 13 as thickening and gelling agents in the manufacure of fruit preserves, of candy, and in the preparation of cooked dishes and of dairy desserts, these pectins applying in particular to the products calling for ultrarapid gelling and to the gelling of weakly acidic sweet products.

16. Use of the extraction residue obtained by the process such as defined in claim 10, as alimentary fibers, in alimentary, pharmaceutical and dietetic industry.

17. Alimentary and dietetic compositions, fruit preserves, candies, cooked dishes and dairy desserts containing pectins such as defined in one of the claims 11 to 13.

18. Alimentary, pharmaceutical and dietetic compositions characterized in that they contain alimentary fibers consisting of the extraction residue obtained by the process such as defined in claim 10.

EP 0 432 210 B1

**Patentansprüche**

1. Verfahren zur Behandlung von Produkten, die reich an pflanzlichen Zellwänden sind, dadurch gekennzeichnet, daß man ein Ausgangsprodukt verwendet, das reich an zerkleinerten Zellwänden ist, falls notwendig dem zerkleinerten Produkt Wasser hinzufügt, um eine Mischung zu erhalten, die einer nachträglichen Scherbehandlung unterworfen werdort kann und daß man das eventuell mit Wasser versetzte Produkt einer Scherbehandlung vor der Extrusion unterwirft, um ein an pflanzlichen Zellwänden reiches Produkt zu erhalten, welches modifiziert ist, um eine Fraktion von wasserlöslichen Polysacchariden zu umfassen, die größer als die natürlich vorkommende ist, ohno Veränderung der allgemeinen chemischen Zusammensetzung des genannten Produkts, wobei das genannte modifizierte Produkt in Form von Aggregoten von verminderter Größe vorliegt, wie Pastillen, Granulaten oder ähnliohem, welche gegebenenfalls einem Zermahlen unterworfen werden, um das modifizierte Produkt in Pulverform zu erhalten und daß man das modifizierte Produkt, eventuell in Pulverform, einer wässrigen Extraktion unterwirft, die es erlaubt einerseits eine wasserlösliche Fraktion und andererseits den Extraktionsrückstand wiedersugewinnen.

2. Verfahren nach Anspruch 1, dadurch gekennzeichnet, daß man ein Ausgangsprodukt verwendet, das einen Trockensubstanzgenalt von wenigstons 70 Gew.-% bezogen auf die Feuchtbasis hat.

3. Verfahren nach einem der Ansprüchs 1 oder 2, dadurch gekennzcichnet, daß man ein Ausgangsprodukt verwendet, daß eine Korngröße im Millimeterbereich aufweist.

4. Verfahren nach einem der Ansprüchs 1 bis 3, dadurch gekennzeichnet, daß man 10 bis 30 Gew.-% wasser zum Ausgangsprodukt in bezug auf das unveränderte Produkt hinzufügt.

5. Verfahren nach einem der Anspruchs 1 bis 4, dadurch gekenneichnet, daß man einen Schergradienten von 100 bis 800 s$^{-1}$ anwendet.

6. Verfahren nach einem der Ansprüche 1 bis 5, dadurch gekennzeichnet, daß man die wasserlöeliche Fraktion des Produkts, das man erhalten will, durch Veränderung der dem Produkt zugeführten Energie im laufe des Scherens regelt.

7. Verfahren nach einem dar Ansprüche 1 bis 6, dadurch geKennzeichent, daß der Gehalt an der wasserlöslichen Polysaccharid-Fraktion des modifizierten Produkts wenigstens gleich dem 1,5-fachen und insbesondere dem doppelten dieses Gohalts im natürlichen Produkt ist.

8. Verfahren nach einem der Ansprüchs 1 bis 7, dadurch gekennzeichent, daß das modifizierte Produkt einen Wassergehalt von höchstens gleich 12 Gew.-%, bezogen auf die Feuchtbasis aufweist.

9. Verfahren nach einem der Ansprüche 1 bis 8, in welchem die Ausgangsprodukte von höheren Pflanzen stammen, die von Natur aus reich an Pectinen sind wie Apfeltrester, Schalen von Zitrusfrüchten und Zuckerrübenschnitzel, dadurch gekennzeichnet, daß man die Pectine aus der erhaltenen wasserlöslichen Fraktion direkt durch Ausfällung mit einem Alkohol oder durch mehrwertige Salze extrahiert.

10. Verfahren nach einem der Ansprüche 1 bis 9, dadurch gekennzeichnet, daß man den Extraktionsrückstand trocknet und zermahlt.

11. Pectine, die einen Methylierungsgrad von wenigstens 75 % aufweisen.

12. Pectine nach Anspruch 11, dadurch gekennzeichnet, daß sie einen Methylierungsgrad von 80-90 % aufweisen.

13. Pectine nach einem der Ansprüchs 11 oder 12, dadurch gekennzeichnet, daß sie in bezug auf die durch ein heißes Extraktionsverfahren mittels einer Mineralsäure bei einem pH-wert von 1-2,5 alle industriellen Fruchtsaft- Nobenprodukten erhaltenen Pectine einen angereicherton Gehalt an Arabinose von etwa 50-100 % aufweisen.

**14.** Extraktionsrückstand, der nach einem der Ansprüche 1 bis 10 erhalten worden kann, gekennzeichnet durch ein Wasserabsorptionivermögen, das größer als ungefähr 20 Gramm pro Gramm Trockenprodukt ist.

**15.** Vervendung der Pectine nach einem der Ansprüchs 11 bis 13 als Verdickungs- und Geliermlttel für Konfitüren, Süßwaren und für die Zubereitung von Fertiggerichten und Milchdesserts, wobei sich diese Pectine insbesondere für Produkte anwenden lassen, die eine sehr schnelle Gelierung erfordern und für die Gelierung von gezuckerten, wenig sauren Produkten.

**16.** Verwendung des Extraktionsrückstandes, der gomäß dem Verfahren nach Anspruch 10 erhalten wurde, als Nahrungsmittelfaser in der Nahrungsmittel-, pnarmazeutisohen-und diätetischen Industrie.

**17.** Nahrungsmittel- und diätetische Zusammensetzungen, Konfitüren, Süßwarenerzeugnisse, Fertiggerichte und Milchdesserts, die Pectine nach einem der Ansprüche 11 bis 13 umfassen.

**18.** Nahrungsmittel-, pharmazeutische-und diätetische Zusam-mensetzungen, dadurch gekennzeichnet, daß sie Nahrungsmittolfasern umfassen, die aus Extraktionstücketänden bestehen, welche gemäß dem Verfahren nach Anspruch 10 erhalten wurden.

FIG.1

FIG.2

FIG.3